# EUROPEAN PATENT APPLICATION

(11) **EP 2 675 076 A2**
(43) Date of publication of application: **18.12.2013**
(21) Application number: 12008622.8
(22) Date of filing: 27.12.2012
(51) Int. Cl.: H04B 5/00

(54) **Method and apparatus for controlling nfc tag power dissipation**

(30) Priority: 13.06.2012 US 201213495424
(71) Applicant: Broadcom Corporation, Irvine, CA 92617 (US)
(72) Inventor: Wilson, Robin, Cirencester, Gloucestershire GL7 1RQ (GB)
(74) Representative: Jehle, Volker Armin

(57) **Abstract**

An apparatus and method is disclosed to control NFC tag power dissipation. A first NFC device antenna harvests power for operation from a signal from another NFC device as a result of ambient magnetic fields present in the environment. The NFC device is configured with a regulator system in order to control the level of harvested power to prevent damage to the NFC device circuitry. The harvested power levels can exceed the ability of the regulator device to dissipate the additional power resulting in regulator damage or a reduction in the regulator lifetime. The power dissipation of the regulator can be monitored thermally, and the power dissipation controlled by reducing the regulation voltage accordingly. Various systems are presented to establish a cutoff threshold to the regulator power dissipation using thermal regulator feedback and/or antenna current monitoring.

## Description

### BACKGROUND

### Field of Disclosure

The disclosure relates to near field communications (NFC), and more specifically to controlling power dissipation in an NFC device.

### Related Art

Near field communication (NFC) devices are being integrated into mobile devices, such as smartphones for example, to facilitate the use of these mobile devices in conducting daily transactions. For example, instead of carrying numerous credit cards, the credit information provided by these credit cards can be loaded into a NFC device and stored therein to be used as needed. The NFC device is simply tapped to a credit card terminal to relay the credit information to it to complete a transaction. As another example, a ticket writing system, such as those used in bus and train terminals, can simply write ticket fare information onto the NFC device instead of providing a paper ticket to a passenger. The passenger simply taps the NFC device to a reader to ride the bus or the train without the use of the paper ticket.

Some NFC devices can operate without a dedicated power source. In order to accomplish this, such NFC devices, commonly referred to as "tags", utilize power harvesting circuitry coupled to an antenna. The antenna is generally implemented with a coil-shaped device consisting of a few turns of wire, either printed onto or attached to the NFC tag. Because such an NFC tag relies on power harvesting circuitry exclusively to provide DC power for all communication functions, the NFC tag is prone to damage from high intensity magnetic fields. In such a case, the communications circuitry can become overloaded, and therefore the NFC tag requires appropriate voltage and/or current limiting circuitry to dissipate the additional coupled power.

### BRIEF SUMMARY OF THE INVENTION

According to an aspect, a near field communication (NFC) device is provided, comprising:
a power harvesting module configured to regulate an induced signal and to provide a regulated power; and
a controller configured to cause the NFC device to enter a reduced power mode of operation when a temperature of the power harvesting module exceeds a temperature threshold.

Advantageously, the power harvesting module comprises:
a rectifier module configured to convert the induced signal from alternating current (AC) to direct current (DC) to provide a rectified power; and
a regulator controller configured to provide a regulation control signal by comparing the rectified power with an overvoltage threshold.

Advantageously, the power harvesting module comprises:
a regulator module configured to regulate a power level of the induced signal in response to the regulation control signal.

Advantageously, the regulation control signal is generated based on a temperature of the regulator module.

Advantageously, the regulator module is a transistor.

Advantageously, the temperature of the regulator module is a transistor die temperature.

Advantageously, the regulation control signal is generated based on the transistor die temperature exceeding a threshold temperature.

Advantageously, the NFC device comprises:
an antenna module configured to provide the induced signal through an antenna current; and
a current detector configured to detect the antenna current and generate a second signal based on the antenna current exceeding a current threshold, the regulation control signal based on the second signal.

Advantageously, the NFC device comprises:
an antenna module configured to provide the induced signal through an antenna current; and
a current limiter configured to limit the antenna current.

Advantageously, the NFC device is coupled to an electronic device, the electronic device and the NFC device together configured to perform NFC communications.

According to an aspect, a near field communications (NFC) device comprises:
a rectifier module configured to rectify an induced signal and to provide a rectified power;
a regulator configured to dissipate the rectified power and to provide a temperature signal indicative of a regulator die temperature; and
a regulator controller configured to provide a regulation control signal to adjust a power dissipation of the regulator based on the regulator die temperature.

Advantageously, the regulator is a transistor.

Advantageously, the regulation control signal is generated based on the transistor die temperature exceeding a threshold temperature.

Advantageously, the NFC device comprises:
an antenna module configured to provide the induced signal through an antenna current; and
a current limiter configured to limit the antenna current.

Advantageously, the NFC device comprises:
an antenna module configured to provide the induced signal through an antenna current; and
a current detector configured to detect the antenna current and generate a second signal in response to the antenna current exceeding a current threshold, the regulation control signal based on the second signal.

According to an aspect, a method is provided for controlling power dissipation in a near field communication (NFC) device, the method comprising:
receiving, by the NFC device, a signal via a magnetic field;
regulating, by the NFC device, the signal, the regulating resulting in heat generation;
disabling, by the NFC device, a portion of the NFC device when a temperature due to the heat generation exceeds a defined threshold.

Advantageously, the NFC device comprises a regulator module, wherein the step of regulating comprises:
limiting, by the regulator module, the signal to substantially not exceed an overvoltage threshold value.

Advantageously, the step of regulating comprises:
monitoring, by the NFC device, a regulator module temperature;
comparing, by the NFC device, the regulator module temperature to a regulator temperature threshold;
maintaining, by the NFC device, the overvoltage threshold value when the regulator module temperature is substantially below the regulator temperature threshold; and
reducing, by the NFC device, the overvoltage threshold value when the regulator module temperature is substantially at or above the regulator temperature threshold.

Advantageously, the regulator module comprises a transistor configured to provide a die temperature via a temperature sensor, wherein the step of monitoring comprises:
monitoring the die temperature using the temperature sensor.

Advantageously, the NFC device comprises a current limiter configured to limit a current of the signal, wherein the step of disabling comprises:
limiting, by the current limiter, the current of the signal to substantially not exceed a defined current threshold.

### BRIEF DESCRIPTION OF THE DRAWINGS/FIGURES

FIG. 1A illustrates a block diagram of a NFC environment according to an exemplary embodiment of the disclosure;

FIG. 1B illustrates a block diagram of a non-NFC environment according to an exemplary embodiment of the disclosure.

FIG. 2 illustrates a block diagram of a NFC device that can be used to detect a presence of an overvoltage condition according to an exemplary embodiment of the disclosure;

FIG. 3 illustrates a block diagram of the power harvesting module that can be used in the NFC device according to an exemplary embodiment of the disclosure;

FIG. 4 is a flowchart illustrating the process of regulating and dissipating the rectified power in the NFC device according to an exemplary embodiment of the disclosure.

The disclosure will now be described with reference to the accompanying drawings. In the drawings, like reference numbers generally indicate identical, functionally similar, and/or structurally similar elements. The drawing in which an element first appears is indicated by the leftmost digit(s) in the reference number.

### DETAILED DESCRIPTION OF THE DISCLOSURE

The following Detailed Description refers to accompanying drawings to illustrate exemplary embodiments consistent with the disclosure. References in the Detailed Description to "one exemplary embodiment," "an exemplary embodiment," "an example exemplary embodiment," etc., indicate that the exemplary embodiment described can include a particular feature, structure, or characteristic, but every exemplary embodiment can not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications can be made to the exemplary embodiments within the spirit and scope of the disclosure. Therefore, the Detailed Description is not meant to limit the disclosure. Rather, the scope of the disclosure is defined only in accordance with the following claims and their equivalents.

Embodiments of the disclosure can be implemented in hardware, firmware, software, or any combination thereof. Embodiments of the disclosure can also be implemented as instructions stored on a machine-readable medium, which can be read and executed by one or more processors. A machine-readable medium can include any mechanism for storing or transmitting information in a form readable by a machine (e.g., a computing device). For example, a machine-readable medium can include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions can be described herein as performing certain actions. However, it should be appreciated that such descriptions are merely for convenience and that such actions in fact result from computing devices, processors, controllers, or other devices executing the firmware, software, routines, instructions, etc.

The following Detailed Description of the exemplary embodiments will so fully reveal the general nature of the disclosure that others can, by applying knowledge of those skilled in relevant art(s), readily modify and/or adapt for various applications such exemplary embodiments, without undue experimentation, without departing from the spirit and scope of the disclosure. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

Although, the description of the present disclosure is to be described in terms of NFC, those skilled in the relevant art(s) will recognize that the present disclosure can be applicable to other communications that use the near field and/or the far field without departing from the spirit and scope of the present disclosure. For example, although the present disclosure is to be described using NFC capable communication devices, those skilled in the relevant art(s) will recognize that functions of these NFC capable communication devices can be applicable to other communications devices that use the near field and/or the far field without departing from the spirit and scope of the present disclosure.

AN EXEMPLARY NEAR FIELD COMMUNICATIONS (NFC) ENVIRONMENT

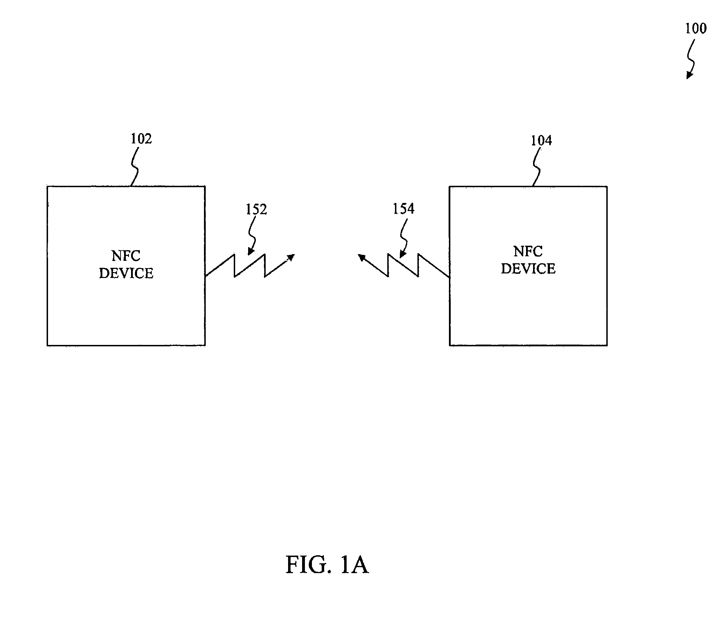

FIG. 1A illustrates a block diagram of a NFC environment according to an exemplary embodiment of the disclosure. An NFC environment 100 provides wireless communication of information, such as commands and/or data, among a first NFC device 102 and a second NFC device 104 that are sufficiently proximate to each other. The first NFC device 102 and/or the second NFC device 104 may be implemented as a standalone or a discrete device or may be incorporated within or coupled to another electrical device or host device such as a mobile telephone, a portable computing device, another computing device such as a personal, a laptop, or a desktop computer, a computer peripheral such as a printer, a portable audio and/or video player, a payment system, a ticketing writing system such as a parking ticketing system, a bus ticketing system, a train ticketing system or an entrance ticketing system to provide some examples, or in a ticket reading system, a toy, a game, a poster, packaging, advertising material, a product inventory checking system and/or any other suitable electronic device that will be apparent to those skilled in the relevant art(s) without departing from the spirit and scope of the disclosure.

The first NFC device 102 and/or the second NFC device 104 interact with each other to exchange the information, in a peer (P2P) communication mode or a reader/writer (R/W) communication mode. In the P2P communication mode, the first NFC device 102 and the second NFC device 104 may be configured to operate according to an active communication mode and/or a passive communication mode. The first NFC device 102 modulates its corresponding information onto a first carrier wave, referred to as a modulated information communication, and generates a first magnetic field by applying the modulated information communication to a first antenna to provide a first information communication 152. The first NFC device 102 ceases to generate the first magnetic field after transferring its corresponding information to the second NFC device 104 in the active communication mode. Alternatively, in the passive communication mode, the first NFC device 102 continues to apply the first carrier wave without its corresponding information, referred to as an unmodulated information communication, to continue to provide the first information communication 152 once the information has been transferred to the second NFC device 104.

The first NFC device 102 is sufficiently proximate to the second NFC device 104 such that the first information communication 152 is inductively coupled onto a second antenna of the second NFC device 104. The second NFC device 104 demodulates the first information communication 152 to recover the information. The second NFC device 104 may respond to the information by modulating its corresponding information onto a second carrier wave and generating a second magnetic field by applying this modulated information communication to the second antenna to provide a second information communication 154 in the active communication mode. Alternatively, the second NFC device 104 may respond to the information by modulating the second antenna with its corresponding information to modulate the first carrier wave to provide the second information communication 154 in the passive communication mode.

In the R/W communication mode, the first NFC device 102 is configured to operate in an initiator, or reader, mode of operation and the second NFC device 104 is configured to operate in a target, or tag, mode of operation. However, this example is not limiting, those skilled in the relevant art(s) will recognize that the first NFC device 102 may be configured to operate in the tag mode and the second NFC device 104 may be configured to operate as in the reader mode in accordance with the teachings herein without departing from the spirit and scope of the present disclosure. The first NFC device 102 modulates its corresponding information onto the first carrier wave and generates the first magnetic field by applying the modulated information communication to the first antenna to provide the first information communication 152. The first NFC device 102 continues to apply the first carrier wave without its corresponding information to continue to provide the first information communication 152 once the information has been transferred to the second NFC device 104. The first NFC device 102 is sufficiently proximate to the second NFC device 104 such that the first information communication 152 is inductively coupled onto a second antenna of the second NFC device 104.

The second NFC device 104 derives or harvests power from the first information communication 152 to recover, to process, and/or to provide a response to the information. Additionally, the second NFC device 104 may respond to the information by modulating the second antenna with its corresponding information to modulate the first carrier wave to provide the second information communication 154.

Typically, the first NFC device 102 and the second NFC device 104 receive the second information communication 154 using the first antenna and the first information communication 152 using the second antenna, respectively. The first antenna converts the second information communication 154 from a magnetic field to a current and/or a voltage to allow for processing of the information communication 152 to recover the information. The second antenna converts the first information communication 152 from a magnetic field to a current and/or a voltage to allow for processing of the information communication 152 to recover the information.

Typically, magnitudes of these currents and/or voltages are related to an intensity of the magnetic field of the first information communication 152 and second information communication 154. In some situations, such as a very close proximity of the first NFC device 102 and the second NFC device 104 to provide an example, the intensity of one or more of these magnetic fields can be large enough to cause permanent damage to the first NFC device 102 and/or the second NFC device 104. The first NFC device 102 and the second NFC device 104 can detect a presence of these large intensity magnetic fields and can enter into a shutdown mode of operation to be automatically disabled upon their detection.

AN EXEMPLARY NON NEAR FIELD COMMUNICATIONS (NFC) ENVIRONMENT

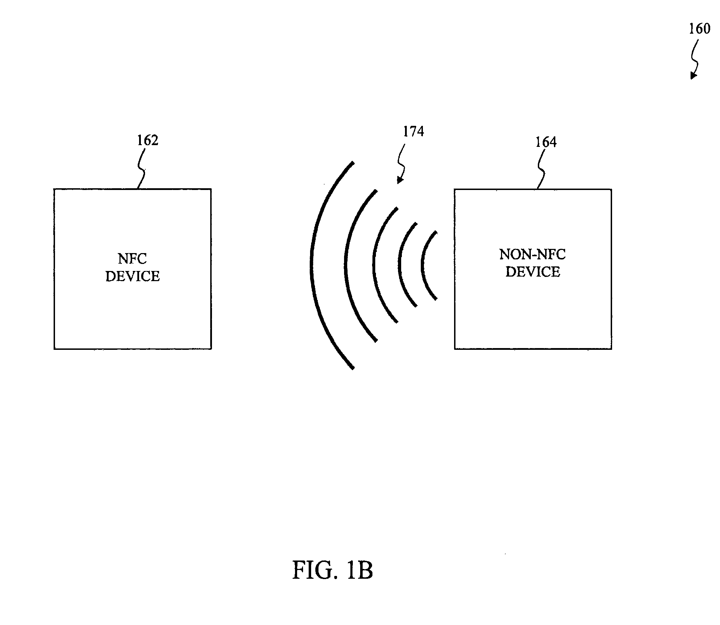

FIG. 1B illustrates a block diagram of a non-NFC environment according to an exemplary embodiment of the disclosure. In some situations, a NFC device, such as the first NFC device 102 and/or the second NFC device 104 to provide some examples, may encounter magnetic fields from other electrical, mechanical, and/or electromechanical devices that may not be NFC capable. For example, a non-NFC environment 160 can include an NFC device 162 and a non-NFC enabled device 164. The NFC device 162 can represent an exemplary embodiment of the first NFC device 102 and/or the second NFC device 104.

As shown in FIG. 1B, a magnetic field 174 generated by the non-NFC enabled device 164 can be of sufficient intensity to inductively couple onto the NFC device 162. In some situations, the intensity of the magnetic field 174 can be large enough to cause permanent damage to the NFC device 162. The NFC device 162 can detect a presence of this large intensity magnetic field and can enter into a shutdown mode of operation to be automatically disabled upon its detection.

AN EXEMPLARY NFC DEVICE

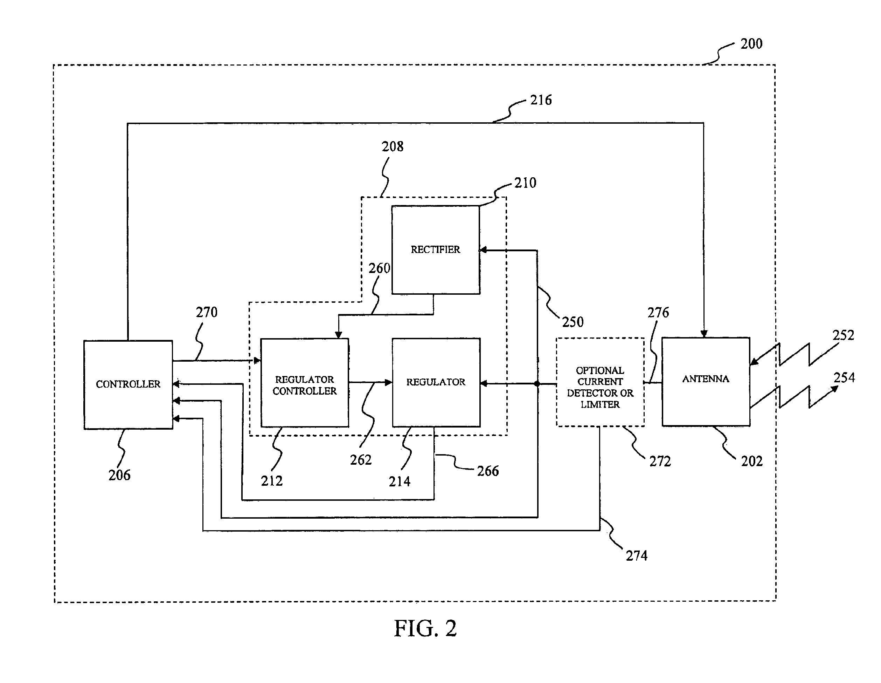

FIG. 2 illustrates a block diagram of an NFC device that can be used in the NFC environment and/or the non-NFC environment according to an exemplary embodiment of the disclosure. By way of example, the NFC device 200 components shown in FIG. 2 can be located as a system on a chip (SoC), an integrated circuit (IC), or a plurality of SoC's and/or IC's. A NFC device 200 can detect an intensity of various magnetic fields that couple onto its antenna. Typically, the NFC device 200 measures various parameters of various components and/or signals flowing through these components. These various parameters are related the intensity of the various magnetic fields that couple onto its antenna. For example, the NFC device 200 can measure various temperatures of its various components. In this example, the temperatures of these components can be a first temperature, or a first set of temperatures, that corresponds to a first magnetic field intensity and can increase and/or decrease to a second temperature, or a second set of temperatures, that corresponds to a second magnetic field intensity as the intensity of the various magnetic fields changes. The NFC device 200 includes an antenna module 202, a controller module 206, a power harvesting module 208, and can include an optional current detector or current limiting device 272. The NFC device 200 can represent an exemplary embodiment of the first NFC device 102, the second NFC device 104, and/or the NFC device 162.

The antenna module 202 inductively receives a received signal 252 to provide a recovered communications signal 276. Specifically, the antenna module 202 converts the received signal 252 from an electromagnetic wave to a current and/or a voltage to provide the recovered communications signal 276. The received signal 252 represents a magnetic field that is provided by another electrical, mechanical, and/or electromechanical device, such as the first NFC device 102, the second NFC device 104, and/or the non-NFC enabled device 164 to provide some examples. The received communications signal 252 can represent a modulated information communication, an unmodulated information communication from another NFC enabled device or simply be a magnetic field provided by a non-NFC enabled device. The received signal 252 can represent an exemplary embodiment of the information communication 152, the information communication 152, and/or the magnetic field 174 to provide some examples. Additionally, the controller module 206 can load modulate the antenna module 202 using a transmitted data sequence 216 to provide a transmitted signal 254.

The optional current detector or current limiting device 272 can be configured to limit the recovered communications signal 276 to provide a recovered communication signal 250. The optional current detector or current limiting device 272 can be located external to the NFC device 200. If an SoC and/or IC is used to implement part or all of the circuitry of the NFC device 200, the optional current detector or current limiting device 272 can be placed off-chip. Such placement of the optional current detector or current limiting device 272 can prevent recovered communications signal 276 from generating excessive voltage levels on-chip. To provide some examples, the optional current detector or current limiting device 272 can be a resettable fuse, a Positive Temperature Coefficient (PTC) resistor, a current detector/limiter, or a voltage comparator circuit. Optional current detector or current limiting device 272 can provide an indicator signal 274, which can include antenna input current and/or voltage monitoring to provide an example.

The power harvesting module 208 can harvest power for the NFC device 200 from the recovered communication signal 250. The power couplings from the power harvesting module 208 that supply the power to other modules of the NFC device 200, such as the antenna module 202 and/or the controller module 206, are not shown in FIG. 2. The power harvesting module 208 includes a rectifier module 210, a regulator controller 212, and a regulator module 214.

The rectifier module 210 rectifies the recovered communication signal 250 to provide a rectified voltage 260. The rectifier module 210 substantially converts the recovered communication signal 250 from alternating current (AC) to direct current (DC) to provide the rectified voltage 260. The rectifier module 210 can be implemented using any suitable means to perform half-wave rectification or full-wave rectification that will be apparent to those skilled in the relevant art(s) without departing from the spirit and scope of the present disclosure.

The regulator controller 212 compares the rectified voltage 260 with a threshold value 270, such as a current and/or voltage from the controller module 206, to provide a regulation control signal 262. The regulator controller 212 provides a regulation control signal 262 to cause the regulator module 214 to adjust the power level of the recovered communication signal 250 to protect the NFC device 200 when the rectified voltage 260 exceeds the threshold value 270.

The regulator module 214 can be implemented using any suitable linear regulator, such as a series regulator or a shunt regulator to provide some examples, any suitable non-linear regulator such as a switching regulator to provide an example, or any combination thereof. Additionally, the regulator module 214 measures various parameters of its various components and/or signals flowing through these components. These various parameters are related the intensity of the received signal 252. For example, energy in the form of heat is dissipated within the regulator module 214 as it regulates the recovered communication signal 250. This heat can cause a temperature of the regulator module 214 as well as the NFC device 200 to increase. The regulator module 214 can provide one or more monitored parameters, such as a regulator temperature signal 266 to provide an example, to the controller module 206 for analysis.

The controller module 206 controls overall operation and/or configuration of the NFC device 200. The controller module 206 receives information from one or more data storage devices such as one or more contactless transponders, one or more contactless tags, one or more contactless smartcards, any other machine-readable mediums that will be apparent to those skilled in the relevant art(s) without departing from the spirit and scope of the invention, or any combination thereof. The other machine-readable medium may include, but is not limited to, read only memory (ROM), random access memory (RAM), magnetic disk storage media, optical storage media, flash memory devices, electrical, optical, acoustical or other forms of propagated signals such as carrier waves, infrared signals, digital signals to provide some examples. The controller module 206 may also receive the information from a user interface such as a touch-screen display, an alphanumeric keypad, a microphone, a mouse, a speaker, any other suitable user interface that will be apparent to those skilled in the relevant art(s) without departing from the spirit and scope of the invention to provide some examples. The controller module 206 may further receive the information from other electrical devices or host devices coupled to the NFC device 200.

The controller module 206 provides the information as the transmitted data sequence 216 for transmission to another NFC capable device. However, the controller module 206 may also use the information to control the overall operation and/or configuration of the NFC device 200. For example, the controller module 206 may issue and/or execute the one or more commands in accordance with the data, if appropriate, to control operations of the NFC device 200, such as a transmission power, a transmission data rate, a transmission frequency, a modulation scheme, a bit and/or a byte encoding scheme and/or any other suitable operation parameter that will be apparent to those skilled in the relevant art(s) without departing from the spirit and scope of the invention, of other NFC capable devices.

The controller module 206 provides recovered information from the recovered communication signal 250 to the data store, the user interface, and/or other electrical devices or host devices. However, the controller module 206 may also use the recovered information to control the overall operation and/or configuration of the NFC device 200. The reception information may include one or more commands and/or data. The controller module 206 may issue and/or execute the one or more commands to control the overall operation and/or configuration of the NFC device 200. For example, the controller module 206 may issue and/or execute the one or more commands in accordance with the data, if appropriate, to control operations of the NFC device 200, such as a transmission power, a transmission data rate, a transmission frequency, a modulation scheme, a bit and/or a byte encoding scheme and/or any other suitable operation parameter that will be apparent to those skilled in the relevant art(s) without departing from the spirit and scope of the invention, of other NFC capable devices.

Additionally, the controller module 206 and/or the optional current detector or current limiting device 272 can cause the NFC device 200 to enter into a shutdown mode of operation by monitoring the regulator temperature signal 266 and/or the indicator signal 274. The controller module 206 compares the temperature signal 266 to a threshold temperature associated with the thermal operating limits of the regulator module 214. The shutdown mode of operation can be triggered by the controller module 206 upon the temperature signal 266 and/or the indicator signal 274 exceeding a maximum temperature threshold value. The maximum temperature threshold value corresponds to a value for which the received signal 252 is of sufficient intensity not to cause permanent damage to the regulator module 214 and/or other modules of the NFC device 200. While the controller module 206 is in shutdown mode of operation, the NFC device 200 is effectively disabled to protect the NFC device 200 from the being permanently damaged by the received signal 252.

Typically, the optional current detector or current limiting device 272 can be used to provide a shutdown mode of operation that is implemented as a high impedance state for all associated connections, input, outputs, and/or ports, to provide an example. Shutdown mode of operation can be implemented using any suitable means to protect the circuitry of NFC device 200 that will be apparent to those skilled in the relevant art(s) without departing from the spirit and scope of the present disclosure.

In some situations, the NFC device 200 can be further configured to exit shutdown mode of operation and resume a normal mode of operation in response to several parameters, inputs, and/or environmental changes in NFC device 200. As an example, if the shutdown mode of operation is triggered by the controller module 206, the controller module 206 can utilize a dedicated active low reset input from the rectifier module 210 to reset the communications circuitry. The dedicated active low reset input would drop as a result of the removal of the received signal 252 or when the received signal 252 is sufficiently low in power, to provide an example. The dedicated active low reset input from rectifier module 210 is not shown in FIG. 2. As another example, the controller module 206 can cause the NFC device 200 to enter into the normal mode of operation in response to a command from a user of the NFC device 200. For example, the user of the NFC device 200 can simply press a button to cause the NFC device 200 to enter into the normal mode of operation. In these examples, the controller module 206 continues to monitor the regulator temperature signal 266 and/or the indicator signal 274 in the normal mode of operation.

EXEMPLARY POWER HARVESTING MODULE

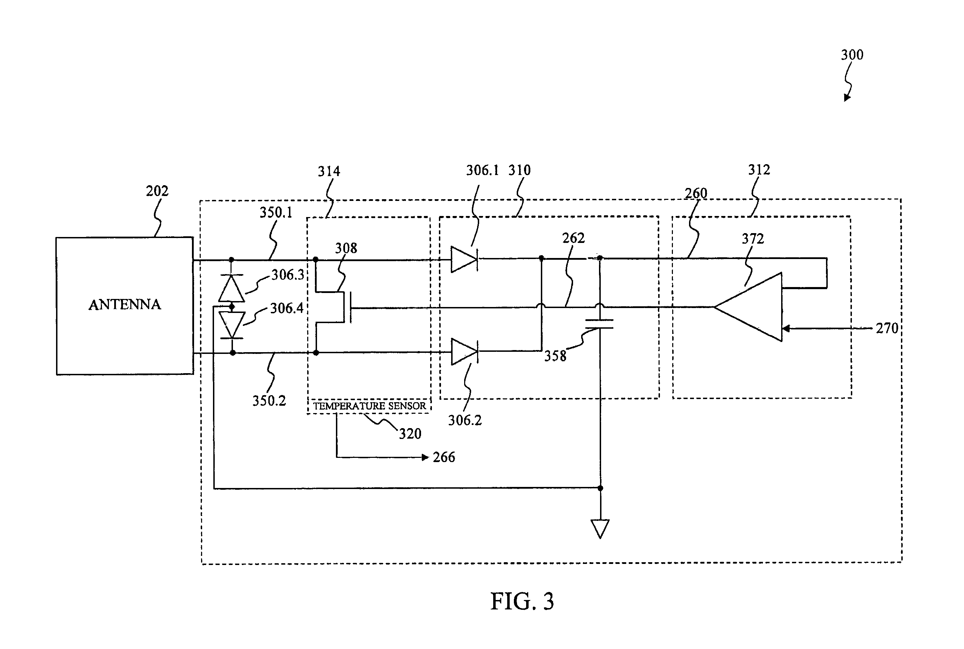

FIG. 3 illustrates a second block diagram of the power harvesting module that can be used in the NFC device according to an exemplary embodiment of the disclosure. A power harvesting module 300 can harvest power from a differential induced signal 350.1, 350.2. The power harvesting module 300 includes a regulator controller 312, a rectifier module 310, and a regulator module 314. The power harvesting module 300 can represent an exemplary embodiment of the power harvesting module 208, with the regulator 314, regulator controller 312, and rectifier 310 also representing possible exemplary embodiments of the regulator module 214, regulator controller 212, and rectifier module 210, respectively.

The antenna module 202 provides the differential induced signal 350.1, 350.2. In the case of a loop antenna device, each recovered signal 350.1 and 350.2 can be associated with either end of the loop coil. The differential induced signal 350.1, 350.2 can represent an exemplary embodiment of the recovered communications signal 250.

The rectifier module 312 substantially converts the differential induced signal 350.1, 350.2 from AC to DC to provide the rectified voltage 260. The rectifier module 312 includes rectifying diodes 306.1 and 306.2, and the capacitor 358. The rectifying diodes 306.1 through 306.4 full-wave rectify the differential induced signal 350.1, 350.2 from AC to DC to provide the rectified voltage 260. The capacitor 358 substantially converts the rectified voltage 260 from AC to DC.

The regulator module 314 adjusts the power level of the differential induced signal 350.1, 350.2 in response to the regulation control signal 262. The regulator module 314 can include a shunt transistor 308, to provide an example. However, the regulator can be implemented using any suitable means that will be apparent to those skilled in the relevant art(s) without departing from the spirit and scope of the present disclosure. The shunt transistor 308 represents a controllable impedance that shunts a portion of the differential induced signals 350.1 and 350.2 together. The amount of the differential induced signals 350.1, 350.2 that are shunted together is related to a magnitude of the regulation control signal 262. The shunt transistor 308 will shunt more of the differential induced signals 350.1, 350.2 together for a larger regulation control signal 262.

The threshold value 270 can be configured as a fixed or a variable value. When threshold value 270 is set to a fixed value, regulator 308 can be viewed as a shunt impedance which changes its value only as a function of the rectified voltage 260. More specifically, the impedance of regulator 308 decreases with an increased induced voltage between 350.1 and 350.2. As the transistor impedance decreases, the shunt transistor conducts additional current which limits the rectified voltage 260 to the threshold value 270. The net effect therefore reduces the overall induced voltage between 350.1 and 350.2. As a result of this relationship, the current through the regulator 308 and the power dissipated by the regulator 308 both increase together with increases in magnetic field intensity incident to the antenna module 202.

Depending on the operating environment and/or conditions of the NFC device 200, the power dissipation of shunt transistor 308 may cause the temperature of the shunt transistor 308 to exceed maximum specified ratings. This excessive temperature increase may reduce the life or otherwise damage the transistor 308. Therefore, it is preferred to vary the threshold value 270 in response to the operating environment of the NFC device 200.

When the NFC device 200 is operating in an NFC environment, for example, it is desirable to set the threshold value 270 as high as possible as communication range is proportional to the rectified voltage 260. When the NFC device 200 is operating in a non-NFC environment, however, there is no need to communicate with other NFC devices, although the communication circuitry associated with the NFC device 200 must still be able to survive in such an environment. When a high magnetic field is present for a longer duration, it is preferable to reduce the threshold value 270. This allows for operation of the shunt transistor 308 in a lower power dissipation mode for an extended period of time, which decreases the temperature of the shunt transistor 308 to safe levels of operation. The NFC device 200 can thereby withstand higher magnetic fields by operating in a design "window." This window allows the shunt transistor to dissipate less power while the communication circuitry is exposed to lower voltage levels.

The threshold value 270 can be varied in response to several different inputs. An example of an input according to an embodiment of the disclosure is to monitor the temperature of the shunt transistor die using a temperature sensor 320 to provide a temperature signal 266. Temperature sensor 320 can be configured to track the temperature of the die of shunt transistor 308 using any suitable means that will be apparent to those skilled in the relevant art(s) without departing from the spirit and scope of the present disclosure. Using the temperature signal 266, threshold value 270 can be adjusted in order to protect the shunt transistor 308 from overheating.

A FLOWCHART REPRESENTING AN EXEMPLARY NFC POWER DISSIPATION.

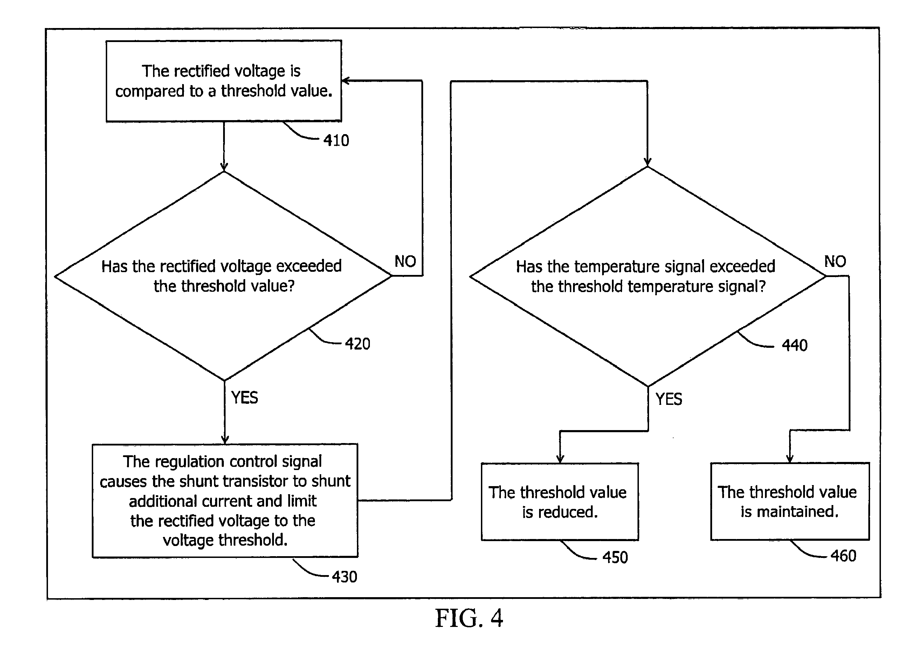

FIG. 4 is a flowchart illustrating the process of regulating and dissipating the rectified power in the NFC device according to an exemplary embodiment of the disclosure.

Referring again to FIG. 3, the rectified voltage 260 is compared to an threshold value 270 at step 410. The regulator controller 312 continues to monitor the rectified voltage 260 and the threshold value 270 at step 420. If the rectified voltage 260 begins to exceeds the threshold value 270, the regulation control signal 262 causes shunt transistor 308 to shunt the additional current and "clamp", or limit, the rectified voltage 260 to substantially equal the voltage threshold 270 at step 430.

While the regulator control signal 262 is increased at step 430, the shunt transistor 308 continues to regulate the rectified voltage 260, and the temperature signal 266 is monitored and compared to a threshold temperature signal. The threshold temperature signal may be a preset constant value or a dynamic value. The threshold temperature signal can be varied by the controller module 206 and/or the regulation signal circuitry 218 for a specific application that may allow for more or less thermal tolerance, to provide an example. The temperature monitoring and setting of a temperature threshold at step 440 can be done using any suitable means that will be apparent to those skilled in the relevant art(s) without departing from the spirit and scope of the present disclosure. If the temperature signal 266 remains below the temperature threshold, the threshold value 270 is maintained at step 460. Otherwise, if the temperature signal 266 exceeds the temperature threshold, the threshold value 270 is reduced as a result in step 450.

### CONCLUSION

It is to be appreciated that the Detailed Description section, and not the Abstract section, is intended to be used to interpret the claims. The Abstract section can set forth one or more, but not all exemplary embodiments, of the disclosure, and thus, are not intended to limit the disclosure and the appended claims in any way.

The disclosure has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

It will be apparent to those skilled in the relevant art(s) that various changes in form and detail can be made therein without departing from the spirit and scope of the disclosure. Thus the disclosure should not be limited by any of the above-described exemplary embodiments, but should be defined only in accordance with the following claims and their equivalents.

## Claims

1. A near field communication (NFC) device, comprising:
a power harvesting module configured to regulate an induced signal and to provide a regulated power; and
a controller configured to cause the NFC device to enter a reduced power mode of operation when a temperature of the power harvesting module exceeds a temperature threshold.

2. The NFC device of claim 1, wherein the power harvesting module comprises:
a rectifier module configured to convert the induced signal from alternating current (AC) to direct current (DC) to provide a rectified power; and
a regulator controller configured to provide a regulation control signal by comparing the rectified power with an overvoltage threshold.

3. The NFC device of claim 2, wherein the power harvesting module comprises:
a regulator module configured to regulate a power level of the induced signal in response to the regulation control signal.

4. The NFC device of claim 3, wherein the regulation control signal is generated based on a temperature of the regulator module.

5. The NFC device of claim 4, wherein the regulator module is a transistor.

6. The NFC device of claim 5, wherein the temperature of the regulator module is a transistor die temperature.

7. The NFC device of claim 6, wherein the regulation control signal is generated based on the transistor die temperature exceeding a threshold temperature.

8. The NFC device of any preceding claim, comprising:
an antenna module configured to provide the induced signal through an antenna current; and
a current detector configured to detect the antenna current and generate a second signal based on the antenna current exceeding a current threshold, the regulation control signal based on the second signal.

9. The NFC device of any preceding claim, comprising:
an antenna module configured to provide the induced signal through an antenna current; and
a current limiter configured to limit the antenna current.

10. The NFC device of any preceding claim, wherein the NFC device is coupled to an electronic device, the electronic device and the NFC device together configured to perform NFC communications.

11. A near field communications (NFC) device, comprising:
a rectifier module configured to rectify an induced signal and to provide a rectified power;
a regulator configured to dissipate the rectified power and to provide a temperature signal indicative of a regulator die temperature; and
a regulator controller configured to provide a regulation control signal to adjust a power dissipation of the regulator based on the regulator die temperature.

12. The NFC device of claim 11, wherein the regulator is a transistor.

13. The NFC device of claim 12, wherein the regulation control signal is generated based on the transistor die temperature exceeding a threshold temperature.

14. A method for controlling power dissipation in a near field communication (NFC) device, the method comprising:
receiving, by the NFC device, a signal via a magnetic field;
regulating, by the NFC device, the signal, the regulating resulting in heat generation;
disabling, by the NFC device, a portion of the NFC device when a temperature due to the heat generation exceeds a defined threshold.

15. The method of claim 14, the NFC device comprising a regulator module, wherein the step of regulating comprises:
limiting, by the regulator module, the signal to substantially not exceed an overvoltage threshold value.
